# EUROPÄISCHE PATENTANMELDUNG

(11) **EP 3 505 804 A1**
(43) Veröffentlichungstag der Anmeldung: **03.07.2019**
(21) Anmeldenummer: 19157285.8
(22) Anmeldetag: 20.02.2017
(51) Int. Cl.: F16L 33/22, F16L 11/08, F16L 33/30

(54) **NIPPEL FÜR EINEN SCHLAUCHANSCHLUSS FÜR EINEN SANITÄRSCHLAUCH**

(30) Priorität: 19.02.2016 DE 202016100900 U
(62) Teilanmeldung aus: 17156957.7
(71) Anmelder: Ramspott GmbH & Co. KG, 59909 Bestwig (DE)
(72) Erfinder: Ramspott, Heiner, 59909 Bestwig (DE)
(74) Vertreter: Graefe, Jörg

(57) **Zusammenfassung**

Die Erfindung betrifft einen Nippel mit einem gerippten Bereich für einen mehrlagigen Schlauch.

## Beschreibung

Die vorliegende Erfindung betrifft einen Nippel für einen Schlauchanschluss.

Mehrschichtige Sanitärschläuche sind häufig Brauseschläuche. Mehrschichtige Brauseschläuche sind aus dem Stand der Technik bekannt. Die meisten bekannten Sanitärschläuche sind aus PVC hergestellt. PVC hat den Nachteil, dass es nach dem Regelwerk des DVWG nicht mehr für Trinkwasserleitungen verwendet werden darf.

Es besteht also der Bedarf Schläuche aus anderen Materialien, die nach dem Regelwerk des DVWG auch für Trinkwasser geeignet sind, herzustellen.

Aus dem Stand der Technik sind zwar auch Sanitärschläuche aus thermoplastischen Elastomeren (TPE) bekannt. Thermoplastische Elastomere haben aber den Nachteil, dass sie insbesondere bei Temperaturen zwischen 50 und 90°C weich werden und beginnen zu fließen. Die Standfestigkeit von bekannten Sanitärschläuchen aus einem TPE ist daher nicht hinreichend praxistauglich.

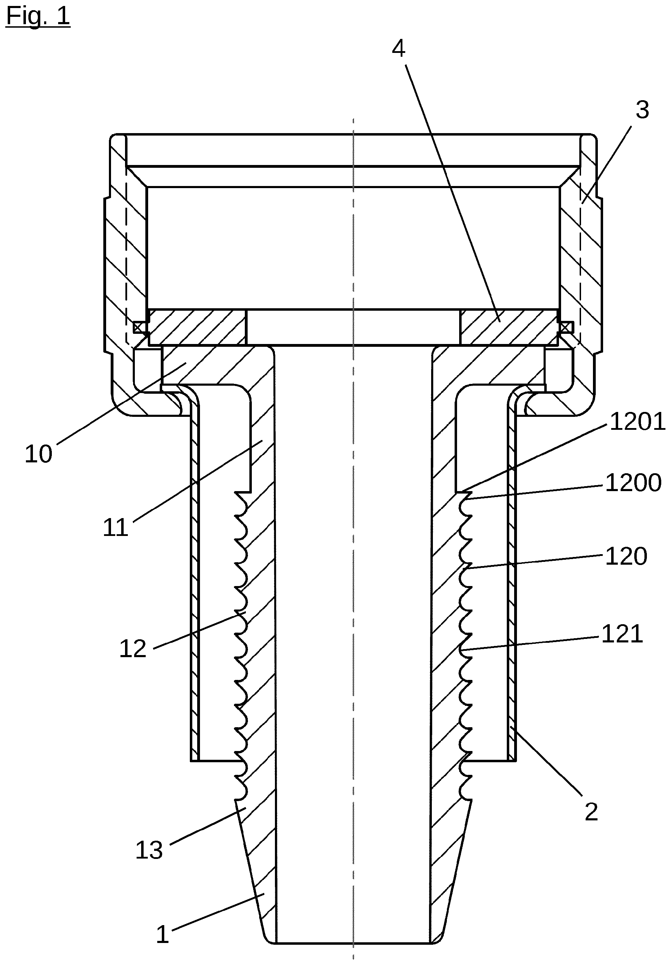

Das Fließen des TPE hat aber nicht nur Auswirkungen auf die Standfestigkeit des Schlauchs allein. Auch die Verbindung des Schlauches mit Armaturen, Handbrausen oder dergleichen ist aufgrund der Fließfähigkeit des TPE nicht ohne weiteres mit den von PVC-Schläuchen bekannten Schlauchanschlüssen zu lösen. Ein solcher Schlauchanschluss ist zum Beispiel aus dem Dokument DE 202 12 169 U1, Fig. 1 und Fig. 6 bekannt. Ein weiterer Schlauchanschluss ist aus dem Dokument DE 92 18 165 U1 bekannt.

Der Erfinder schlägt vor einen zum Beispiel aus dem Dokument DE 92 18 165 U1 bekannten Nippel für einen Schlauchanschluss für einen Sanitärschlauch, mit einem Kragen, an welchem eine Überwurfmutter anlegbar ist, mit einem sich an den Kragen anschließenden gleichförmig kreiszylindrischen Bereich und mit einem sich an den kreiszylindrischen Bereich anschließenden gerippten Bereich, dadurch zu verbessern, dass der gleichförmig kreiszylindrische Bereich einen Durchmesser hat, der kleiner ist als der Durchmesser von Rippen in dem gerippten Bereich.

Ein erfindungsgemäßer Nippel, mit einem kreiszylindrischen Bereich, der hinter die Rippen zurückspringt, hat gegenüber einem aus dem Dokument DE 92 18 165 U1 bekannten Nippel den Vorteil, dass das Ende des Schlauches, in welchen der Nippel eingebracht ist, nicht so stark durch den Nippel verformt wird. Die Verformung des Endes des Schlauches mit einem erfindungsgemäßen Nippel bleibt weit von der Fließgrenze des für den Schlauch verwendeten Materials entfernt. Zugleich wird durch das Vorsehen der Rippen anstelle eines Wulstes auch in einem sich an den gleichförmig kreiszylindrischen Bereich anschließenden Bereich eine bessere Verzahnung des Schlauches bei geringerer Verformung erreicht, was für einen Schlauch aus TPE insbesondere aufgrund seiner schon bei vergleichsweise niedrigen Temperaturen herabgesetzten Fließgrenze besonders von Vorteil ist.

Nach einer weiteren Lösung kann sich bei einem erfindungsgemäßen Nippel, der einen gleichförmig kreiszylindrischen Bereich haben kann aber nicht haben muss, an den gerippten Bereich ein konisch geformter Bereich anschließen, der sich von einer Rippe des gerippten Bereichs unterscheidet. Auch bei dem aus dem Dokument DE 92 18 165 U1 bekannten Nippel ist an dem vom Kragen abgewandten freien, in den Schlauch einzubringenden Ende ein konisch geformter Bereich vorgesehen. Dieser Konus wird aber durch eine Rippe gebildet, die genauso geformt ist, wie die übrigen Rippen des gerippten Bereichs. Der konische Bereich eines erfindungsgemäßen Nippels unterscheidet sich dagegen von einer Rippe des gerippten Bereichs. Die Rippen des gerippten Bereichs, die übrigens gleich sein können, können insbesondere kleiner sein als der konische Bereich.

Es ist möglich, dass der konische Bereich eines erfindungsgemäßen Nippels an einem kragenseitigen Enden einen Durchmesser hat, der dem Durchmesser einer Rippe entspricht.

Der konische Bereich kann an einem kragenabgewandten Ende einen Durchmesser aufweisen, der kleiner ist als der Durchmesser einer Verjüngung zwischen zwei Rippen.

Der konische Bereich kann eine Länge haben, die der Länge von vier bis neun, vorzugsweise von sechs bis sieben Rippen entspricht.

Der konische Bereich kann eine Steigung von 10 bis 14°, insbesondere 12° aufweisen.

Die Rippen des gerippten Bereichs können eine erste Flanke mit einer Steigung von ca. 35° bis 55°, insbesondere 40 bis 50°, vorzugsweise 45° gegenüber einer Mittelachse des Nippels aufweisen.

Eine zweite Flanke kann eine Steigung von ca. 80 bis 100, vorzugsweise von 90° gegenüber der Mittelachse des Nippels aufweisen.

Die Verjüngung zwischen zwei Rippen kann einen Übergang zwischen einer ersten Flanke einer der Rippen und einer zweiten Flanke einer benachbarten der Rippen schaffen, wobei die Verjüngung mit einem Radius gerundet sein kann.

Der gleichförmig kreiszylindrische Bereich kann einen Durchmesser aufweisen, der kleiner ist als der Durchmesser der Verjüngung zwischen den Rippen aber größer als der Durchmesser des konischen Bereichs an seinem kragenabgewandten Ende.

Der gleichförmig kreiszylindrische Bereich eines erfindungsgemäßen Nippels kann eine Länge aufweisen, die der Länge von drei bis sechs, vorzugsweise von vier bis fünf Rippen entspricht.

Der gerippte Bereich kann 10 bis 20 Rippen, vorzugsweise 12 oder 13 Rippen aufweisen. Der Abstand der Spitzen der Rippen voneinander kann 0,8 bis 1,8 mm, insbesondere 1,0 bis 1,6 mm, vorzugsweise 1,1 bis 1,2 mm betragen.

An das kragenabgewandte Ende des konischen Bereichs kann sich eine mit einem Radius gerundete Spitze anschließen.

Außerdem schlägt der Erfinder einen Schlauch mit folgendem Aufbau vor:
- eine Innenschicht aus einem thermoplastischen Elastomer (TPE),
- eine erste Armierungsschicht aus gegensinnig gewendelten Fäden oder Bändern, aus Maschenware aus Fäden oder Bändern oder einem Gewebe aus Fäden oder Bändern,
- eine erste Zwischenschicht aus einem, insbesondere schwarz gefärbten, thermoplastischen Elastomer (TPE),
- eine zweite Armierungsschicht aus gegensinnig gewendelten Fäden oder Bändern, aus Maschenware aus Fäden oder Bändern oder einem Gewebe aus Fäden oder Bändern und
- eine Schicht (Außenschicht oder zweite Zwischenschicht) aus einem, insbesondere gefärbten, thermoplastischen Elastomer (TPE).

Durch den Aufbau eines erfindungsgemäßen Schlauches mit den zwei Armierungschichten und den Schichten aus TPE erhält man einen Schlauch der insbesondere im Hinblick auf die Knickfestigkeit und Flexibilität einem bekannten Sanitärschlauch mit einem Außendurchmesser ungefähr zwischen 13,5 und 15,5 mm Außendurchmesser mit Schichten aus PVC nahezu gleichwertig ist.

Die Außenschicht kann sich an die ggf. vorhandene zweite Zwischenschicht, eine ggf. vorhandene dritte Zwischenschicht oder die zweite Armierungsschicht anschließen.

Die Außenschicht eines erfindungsgemäßen Schlauches kann transparent sein. Das ist insbesondere sinnvoll, wenn die zweite Armierungsschicht von außen sichtbar sein soll. Es ist auch möglich, dass die Außenschicht transluzent oder opak ist.

Die Außenschicht eines erfindungsgemäßen Schlauches kann gefärbt sein.

Es ist möglich, dass die Außenschicht aus TPE oder PVC oder einem anderen geeigneten Kunststoff besteht.

Gemäß der Erfindung kann zwischen der zweiten Armierungsschicht und der Außenschicht eine zweite Zwischenschicht und ggf. auch noch eine dritte Zwischenschicht aus einem thermoplastischen Elastomer (TPE) angeordnet sein. Insbesondere wenn die Außenschicht transparent oder transluzent ist, kann diese zweite oder die dritte Außenschicht eingefärbt sein. Die Zwischenschicht kann schwarz gefärbt und opak oder nahezu opak sein. Wenigstens eine der Zwischenschichten kann schwarz eingefärbt und opak sein. Dadurch kann eine Lichteinwirkung auf das im Schlauch geführte Medium verhindert werden. Außerdem können durch schwarze Zwischenschichten zusammen mit gefärbten, über den gefärbten Zwischenschichten liegenden Schichten Farbeffekte erzielt werden, die sich auf das äußere Erscheinungsbild des Schlauchs auswirken.

Es ist möglich, dass zwischen der zweiten oder der dritten Zwischenschicht und der Außenschicht eine Dekorschicht aus einer Folienbandwicklung oder einer Folie, insbesondere aus einer Heißprägefolie vorgesehen ist. Ebenso kann auf eine Außenseite der zweiten Zwischenschicht ein Lack oder ein anderer Beschichtungsstoff zum Beispiel auch aus einem Pulver aufgetragen sein. Auch dann ist die Außenschicht vorzugsweise transparent oder transluzent.

Der Innendurchmesser eines erfindungsgemäßen Schlauches kann ca. 7 bis 9 mm, insbesondere 8 bis 8,5 mm betragen, der Außendurchmesser 13,5 mm bis 15,5 mm, insbesondere 13,5 bis 14,5 mm.

Die Innenschicht kann eine Schichtdicke von ca. 0,7 bis 1,5, insbesondere 1 mm haben.

Die erste Zwischenschicht kann eine Schichtdicke von ca. 0,3 bis 0,8, insbesondere ca. 0,5 oder 0,6 mm haben.

Die zweite Zwischenschicht kann eine Schichtdicke von ca. 0,3 bis 0,8, insbesondere ca. 0,5 oder 0,6 mm haben.

Die dritte Zwischenschicht, wenn vorhanden, kann eine Schichtdicke von ca. 0,3 bis 0,8, insbesondere ca. 0,5 oder 0,6 mm haben.

Die Außenschicht hat vorzugsweise eine Schichtdicke von ca. 0,3 bis 0,8, insbesondere ca. 0,5 oder 0,6 mm.

Die Textilfäden, die für die Armierungsschichten verwendet werden, können Fäden mit einer längenbezogenen Masse von maximal 500 dtex, vorzugsweise aber unter 300 dtex, z. B. 280 dtex sein.

Die Fäden einer solchen Armierungsschicht sind so dünn, dass sie von außen kaum oder nicht sichtbar oder nur bei extremer Biegung des Schlauches sichtbar sind. Damit kann ein Schlauch geschaffen werden, der durch eine Armierungsschicht verstärkt ist, ohne dass die Einlage von außen sichtbar ist. Die geringe längenbezogene Masse der Fäden ist dabei deutlich unter der längenbezogenen Masse der Fäden, die bei bekannten Schläuchen bei ca. 550 dtex liegt. Die längenbezogene Masse der Fäden, die für Armierungsschichten von erfindungsgemäßen Fäden verwendet werden, ist somit rund halb so groß wie die längenbezogene Masse der Fäden herkömmlicher Schläuche. Die Fäden sind damit dünner und zeichnen sich nicht auf der äußeren Oberfläche der Zwischenschicht und/oder der Außenschicht ab.

Durch ein Erhitzen der Innenschicht vor dem Aufbringen der Fäden kann bei der Herstellung des Schlauches dafür gesorgt werden, dass die Fäden sich in die Oberfläche der Zwischenschicht eindrücken, was einem Abzeichnen der Fäden auf der äußeren Oberfläche der Außenschicht entgegenwirkt.

Bei einem erfindungsgemäßen Schlauch können Fäden verwendet werden, die eine Drehung von 130 Drehungen pro Meter aufweisen.

Die Armierungsschicht eines erfindungsgemäßen Schlauches kann ausschließlich Fäden mit einer längenbezogenen Masse von maximal 130, insbesondere maximal 74 dtex aufweisen. Zwar haben Fäden mit einer längenbezogenen Masse von unter 150 dtex den Nachteil, dass sie sich mitunter schwerer verarbeiten lassen, dafür führen sie in einem erfindungsgemäßen Schlauch zu einer ausreichenden Festigkeit des Schlauches, wenn zwei Armierungsschichten vorhanden sind, wie es erfindungsgemäß vorgesehen ist. Insbesondere Fäden mit einer längenbezogenen Masse von 74 dtex führen zu einer ausreichenden Festigkeit. Ein Vorteil der Fäden mit einer kleinen längenbezogenen Masse ist, dass diese sich nicht nach dem überziehen mit einer einzigen Schicht, z. B. der Außenschicht oder einer Zwischenschicht auf der äußeren Oberfläche der Schicht abzeichnen.

Die Fäden der Armierungsschicht eines erfindungsgemäßen Schlauches können in sich gedreht sein. Die Anzahl der Drehungen kann 130 pro Meter betragen. Eine geringe Drehung (Zwirnung) des Fadens hat gegenüber einer starken Zwirnung den Vorteil, dass der Faden sich flach auf die Oberfläche der Schicht legt, um die er gelegt wird. Auch dadurch kann einem Abzeichnen der Fäden bzw. der Textillage in der äußeren Oberfläche der Zwischenschicht oder der äußeren Oberfläche der Außenschicht entgegen gewirkt werden.

Jeder der Fäden einer Armierungsschicht kann als Wendel um den Innenschlauch gelegt sein. Durch einen Wendel wird gegenüber längs des Schlauches verlaufender Fäden auch die Druckfestigkeit und nicht nur die Zugfestigkeit verbessert. Wenigstens ein Faden ist rechtsgängig gewendelt und wenigstens ein Faden ist linksgängig gewendelt. Durch Wendel in beide Richtungen wird der Neigung eines Schlauches entgegen gewirkt, sich z. B. bei Druckbelastung abhängig von der Richtung der Wendel zu verformen.

Es hat sich gezeigt, dass es von Vorteil ist, mehrere Wendel vorzusehen. So können zum Beispiel bei einem erfindungsgemäßen Schlauch sechs bis 18 Fäden rechtsgängig und sechs bis 18 Fäden linksgängig gewendelt sein.

Der Abstand von zwei rechtsgängigen oder zwei linksgängigen Fäden, in einer Längsrichtung des Schlauches gemessen, kann ca. 1 bis 2 mm betragen.

Gemäß der Erfindung ist es möglich, dass die Fäden der ersten Armierungsschicht dicker sind als die Fäden der zweiten Armierungsschicht.

Die Fäden der ersten Armierungsschicht können eine längenbezogene Masse von 150 dtex bis 1000 dtex, insbesondere 200 bis 600 dtex haben, die Fäden der zweiten Armierungsschicht können eine längenbezogene Masse von weniger als 300 dtex, insbesondere 70 dtex bis 150 dtex haben.

Die Fäden der verschiedenen Armierungsschichten können gleiche längenbezogene Massen haben.

Ferner ist es möglich, dass für die erste Armierungsschicht neun rechtsgängige und neun linksgängige Fäden verwendet werden. Für die zweite Schicht können dann zwölf rechtsgängige und zwölf linksgängige Fäden verwendet werden. Dickere Fäden haben den Vorteil, dass sie für eine höhere Festigkeit sorgen. Der Nachteil ist, dass sie sich leichter auf der Oberfläche einer sie überdeckenden Zwischen- oder Außenschicht abzeichnen. Daher werden dickere Fäden vorteilhaft in der ersten Armierungsschicht verwendet, deren Überdeckung größer ist.

Je nach Bedarf kann der Fachmann, der einen erfindungsgemäßen Schlauch realisieren möchte, für die gewendelten Fäden der Armierungsschichten eine höhere oder geringere Steigung wählen. Eine geringere Steigung hat Vorteile für die Druckfestigkeit des Schlauches. Eine hohe Steigung hat Vorteile für die Zugfestigkeit des Schlauches.

Der Faden oder die Fäden der Armierungsschicht können aus einem Polyesterfaserstoff, zum Beispiel aus PET bestehen.

Der Faden oder die Fäden können aus 24 bis 48 Filamenten (Fasern) mit ca. 2 bis 8 dtex, insbesondere 3 bis 5,7 dtex bestehen.

Typische Schläuche, insbesondere Brauseschläuche können wie folgt aufgebaut sein:
Beispiel 1:
   - Innenschicht: thermoplastisches Elastomer (TPE)
   - 1. Armierungsschicht: Gegensinnig gewendelte Textilfäden, je Wicklungssinn mind. 6 Fäden
   - 1. Zwischenschicht: thermoplastisches Elastomer (TPE), ggf.
      eingefärbt, insbesondere schwarz gefärbt,
   - 2. Armierungsschicht: Gegensinnig gewendelte Textilfäden, je Wicklungssinn mind. 6 Fäden
   - Außenschicht: thermoplastisches Elastomer (TPE), gefärbt
Beispiel 2:
   - Innenschicht: thermoplastisches Elastomer (TPE)
   - 1. Armierungsschicht: Gegensinnig gewendelte Textilfäden, je Wicklungssinn mind. 6 Fäden
   - 1. Zwischenschicht: thermoplastisches Elastomer (TPE)
   - 2. Armierungsschicht: Gegensinnig gewendelte Textilfäden, je Wicklungssinn mind. 6 Fäden
   - 2. Zwischenschicht: thermoplastisches Elastomer (TPE), möglicherweise gefärbt
   - Ggf. 3. Zwischenschicht: thermoplastisches Elastomer (TPE) oder anderer Kunststoff, gefärbt, insbesondere schwarz gefärbt, oder ungefärbt, transparent, transluzent oder opak
   - Außenschicht: thermoplastisches Elastomer (TPE), transparent oder gefärbt
Beispiel 3:
   - Innenschicht: thermoplastisches Elastomer (TPE)
   - 1. Armierungsschicht: Gegensinnig gewendelte Textilfäden, je Wicklungssinn mind. 6 Fäden
   - 1. Zwischenschicht: thermoplastisches Elastomer (TPE)
   - 2. Armierungsschicht: Gegensinnig gewendelte Textilfäden, je Wicklungssinn mind. 6 Fäden
   - 2. Zwischenschicht: thermoplastisches Elastomer (TPE), ggf. gefärbt, insbesondere schwarz gefärbt,
   - Dekorschicht: Pulverschicht, wendelförmige Folienbandwicklung (chromfarben), Lackschicht oder Folie, zum Beispiel bedampfte Folie oder Heißprägefolie auf der 2. Zwischenschicht
   - Außenschicht: thermoplastisches Elastomer (TPE) oder PVC, transparent oder farbig-transluzent, z.B. gelb-transluzent, um einen Goldton zu erzielen,
Beispiel 4:
   - Innenschicht: thermoplastisches Elastomer (TPE)
   - 1. Armierungsschicht: Gegensinnig gewendelte Textilfäden, je Wicklungssinn mind. 6 Fäden
   - 1. Zwischenschicht: thermoplastisches Elastomer (TPE)
   - 2. Armierungsschicht: Gegensinnig Gegenseitig gewendelte Textilfäden, je Wicklungssinn mind. 6 Fäden
   - 2. Zwischenschicht: thermoplastisches Elastomer (TPE), möglicherweise gefärbt,
   - 3. Zwischenschicht: thermoplastisches Elastomer (TPE), möglicherweise gefärbt, insbesondere schwarz gefärbt,
   - Möglicherweise Dekorschicht: Pulverschicht, wendelförmige Folienbandwicklung (chromfarben), Lackschicht oder Folie, zum Beispiel bedampfte Folie oder Heißprägefolie auf der 3. Zwischenschicht
   - Außenschicht: thermoplastisches Elastomer (TPE), transparent

Die schwarze Einfärbung der Zwischenschichten kann bei einer darauf zumindest mittelbar folgenden chromfarbenen Schicht den Chromglanz der chromfarbenen Schicht verstärken.

Vorzugsweise ist die schwarz gefärbte Schicht opak oder nahezu opak, um eine Durchdringung des Schlauchs mit Licht von außen zu verhindern oder deutlich einzuschränken. Dadurch kann ggf. das Wachstum von Keimen im Schlauch reduziert oder unterbunden werden.

In den Beispielen können in den Armierungsschichten anstelle der gegensinnig gewendelten Fäden auch eine Maschenware aus Fäden oder Bändern oder ein Gewebe aus Fäden oder Bändern verwendet werden.

Es kann von Vorteil sein, wenn ein erfindungsgemäßer Schlauch eine dritte Armierungsschicht hat.

Ebenso ist es möglich, dass eine der Zwischenschichten, die Außenschicht oder die Innenschicht mit Glasfasern oder Kohlefasern oder anderen Fasern oder Materialien verstärkt ist.

Ein erfindungsgemäßer Schlauch kann mit Anschlussmitteln versehen sein und eine Schlauchanordnung bilden, die über die Anschlussmittel an den Enden des Schlauchs mit einer Armatur oder einer Handbrause oder Ähnlichem verbunden werden können.

Wenigstens eines der Anschlussmittel kann einen erfindungsgemäßen Nippel aufweisen, der in das Ende des Schlauches eingesetzt ist.

Das Anschlussmittel einer erfindungsgemäßen Schlauchanordnung kann eine Hülse umfassen, in die das Ende des Schlauches mit dem darin eingesetzten Nippel eingesetzt ist. Der Schlauch ist dann zwischen dem Nippel und der Hülse eingeklemmt. Die durch die Hülse und den Nippel hervorgerufene Klemmung bewirkt, dass die Rippen des Nippels einen innigen Verbund zwischen dem Nippel und dem Schlauch herstellen. Das wird insbesondere auch durch die besondere Gestaltung des Nippels erreicht.

Die Hülse kann eine Länge haben, die kleiner ist als die Länge des gleichförmig kreiszylindrischen Bereichs und des gerippten Bereichs zusammen oder des gerippten Bereichs, falls kein gleichförmig kreiszylindrischen Bereich vorgesehen ist.

Weitere Merkmale der Erfindungen werden anhand der nachfolgenden Beschreibung eines Ausführungsbeispiels unter Bezugnahme auf die beiliegende Abbildung erläutert. Darin zeigt:
- Fig. 1: einen Schnitt durch ein Anschlussmittel mit einem erfindungsgemäßen Nippel.

Das dargestellte Anschlussmittel weist den erfindungsgemäßen Nippel 1, eine Hülse 2, eine Dichtung 3 und eine Überwurfmutter 4 auf.

Der Nippel 1 hat einen Kragen 10 an einem Ende. Ein erfindungsgemäßer Nippel könnte einen den Kragen überragenden Abschnitt haben, wie er zum Beispiel in der Fig. 1 oder *6* des Dokumentes DE 202 12 269 U1 mit dem Bezugszeichen 33 bezeichnet ist. Ein solcher überragender Abschnitt hat den Vorteil, dass der Nippel auch für eine drehbare und dennoch feste und dichte Verbindung zwischen einer Schlauchanordnung und einer Armatur und einer Handbrause möglich ist, wie er in den Figuren 1 und 6 des genannten Dokumentes gezeigt ist. Weder der Kragen 10 noch das überragende Ende werden in einen Schlauch eingebracht.

An den Kragen 10 des erfindungsgemäßen Nippels schließt sich ein gleichförmig, kreiszylindrischer Abschnitt 11 an. Dieser Abschnitt hat einen Durchmesser, der geringfügig größer oder genauso groß wie der Innendurchmesser eines Schlauches ist, in der der Nippel 1 eingebracht wird.

An den gleichförmig, kreiszylindrischen Abschnitt 11 schließt sich ein gerippter Abschnitt 12 an. Dieser Abschnitt 12 weist eine Vielzahl von in Richtung einer Mittelachse des Nippels 1 hintereinanderliegenden Rippen 120 auf. Zwischen zwei Rippen 120 findet sich jeweils eine Verjüngung 121.

Die Rippen 120 sind gleich gestaltet. Jede Rippe hat eine erste Flanke 1200, die in etwa 45° zu der Mittelachse des Nippels 1 geneigt ist, und eine zweite Flanke 1201, die in etwa 90° zu der Mittelachse des Nippels 1 geneigt ist. Die Verjüngung 121 zwischen einer ersten Flanke einer ersten Rippe und einer zweiten Flanke einer benachbarten Rippe ist mit einem Radius gerundet, könnte aber auch anders geformt sein.

Im Bereich der Verjüngung 121 hat der Nippel 1 einen Durchmesser, der größer ist als der Durchmesser des gleichförmig, kreiszylindrischen Bereichs 11, und kleiner ist als an den Spitzen der Rippen 120, oder kurz gesagt an den Rippen.

An den gerippten Bereich 12 schließt sich ein konisch geformter Bereich 13 des Nippels 1 an. Der konische Bereich 13 hat eine Länge zwischen der Länge von sechs bis sieben Rippen 120 entspricht. Seine größte Ausdehnung hat der konische Bereich 13 an seinem kragenseitigen Ende. Der Durchmesser am kragenseitigen Ende des konischen Bereichs 13 entspricht dem Durchmesser der Rippen 120. Zwischen dem kragenseitigen Ende des konischen Bereichs und einer ersten Rippe ist eine Verjüngung 121 wie zwischen zwei Rippen 120 vorgesehen.

An einem kragenfernen Ende des konischen Bereichs 13 des dargestellten erfindungsgemäßen Nippels 1 schließt sich ein mit einem Radius abgerundetes Ende an. An dem kragenfernen Ende des konischen Bereichs 13 hat der Nippel 1 einen äußeren Durchmesser, der kleiner ist als der Durchmesser des gleichförmig kreiszylindrischen Bereichs 11.

Nur der Vollständigkeit halber sei erwähnt, dass der Nippel ein zentrales Durchgangsloch aufweist, welches sich durch alle Bereiche des Nippels 1 einschließlich des Kragens 10 entlang der Mittelachse erstreckt.

Der erfindungsgemäße Nippel 1 wird mit dem konischen Bereich 13, dem gerippten Bereich 12 und dem kreiszylindrischen Bereich 11 in einen erfindungsgemäßen Schlauch eingebracht, bis vorzugsweise das Ende des Schlauchs an dem Kragen 10 anliegt.

Die Hülse 2 oder ein Hülse, die einer aus dem Dokument DE 202 12 169 U1, Fig. 1 und 6 bekannten und dort mit dem Bezugszeichen 4 bezeichneten Hülse weitgehend entspricht, wird von außen über den Schlauch gezogen, bis vorzugsweise auch die Hülse an dem Kragen 10 des Nippels 1 anliegt. Das Ende des Schlauches ist dann zwischen dem Nippel 1 und der Hülse 2 eingeklemmt.

Die Hülse und der Nippel 1 einer erfindungsgemäßen Schlauchanordnung können aus Kunststoff hergestellt sein. Die Hülse 2 kann - wie im dargestellten Beispiel - aus Metall hergestellt sein.

Mit der an sich bekannten Überwurfmutter 4, die auch lang und konisch ausgeführt sein kann, kann der Schlauch dann an einer Armatur oder einer Handbrause oder dergleichen befestigt werden. Eine Dichtung 3 sorgt dabei für die notwendige Dichtigkeit.

## Patentansprüche

1. Nippel (1) für einen Schlauchanschluss für einen Sanitärschlauch, mit einem Kragen (10), an welchem zumindest mittelbar eine Überwurfmutter (4) anlegbar ist, einem sich an den Kragen (10) anschließenden gleichförmig kreiszylindrischen Bereich (11) und einen sich an den kreiszylindrischen Bereich (11) anschließenden gerippten Bereich (12),
**dadurch gekennzeichnet,**
**dass** der gleichförmig kreiszylindrische Bereich (11) einen Durchmesser hat, der kleiner ist als der Durchmesser von Rippen (120) in dem gerippten Bereich.

2. Nippel für einen Schlauchanschluss für einen Sanitärschlauch, mit einem Kragen (10), an welchem zumindest mittelbar eine Überwurfmutter (4) anlegbar ist und einem gerippten Bereich (12), insbesondere Nippel nach Anspruch 1, **dadurch gekennzeichnet, dass** sich an den gerippten Bereich (12) ein konisch geformter Bereich (13) anschließt, der sich von einer Rippe (120) des gerippten Bereichs (12) unterscheidet.

3. Nippel nach Anspruch 2, **dadurch gekennzeichnet, dass** der konische Bereich eine Länge hat, die der Länge von vier bis neun, vorzugsweise von sechs bis sieben Rippen entspricht.

4. Nippel nach Anspruch 2 oder 3, **dadurch gekennzeichnet, dass** der konische Bereich eine Steigung von 10 bis 14°, insbesondere 12° aufweist.

5. Nippel nach einem der Ansprüche 1 bis 4, **dadurch gekennzeichnet, dass** die Verjüngung (121) zwischen zwei Rippen (120) einen Übergang zwischen einer ersten Flanke (1200) einer der Rippen (120) und einer zweiten Flanke (1201) einer benachbarten der Rippen (120) schafft, wobei die Verjüngung (121) mit einem Radius gerundet ist, wobei die Rippen des gerippten Bereichs eine erste Flanke mit einer Steigung von ca. 35° bis 55°, insbesondere 40 bis 50°, vorzugsweise 45° gegenüber einer Mittelachse des Nippels aufweisen.

6. Nippel nach einem der Ansprüche 1 bis 5, **dadurch gekennzeichnet, dass** die Verjüngung (121) zwischen zwei Rippen (120) einen Übergang zwischen einer ersten Flanke (1200) einer der Rippen (120) und einer zweiten Flanke (1201) einer benachbarten der Rippen (120) schafft, wobei die Verjüngung (121) mit einem Radius gerundet ist, wobei die zweiten Flanken eine Steigung von ca. 80 bis 100, vorzugsweise von 90° gegenüber der Mittelachse des Nippels aufweisen.

7. Nippel nach einem der Ansprüche 1 bis 6, **dadurch gekennzeichnet, dass** der gerippte Bereich 10 bis 20 Rippen, vorzugsweise 12 oder 13 Rippen aufweist.

8. Nippel nach einem der Ansprüche 1 bis 7, **dadurch gekennzeichnet, dass** der Abstand der Spitzen der Rippen voneinander kann 0,8 bis 1,8 mm, insbesondere 1,0 bis 1,6 mm, vorzugsweise 1,1 bis 1,2 mm betragen.

9. Nippel nach einem der Ansprüche 1 bis 8, **dadurch gekennzeichnet, dass** der gleichförmig kreiszylindrische Bereich eines erfindungsgemäßen Nippels eine Länge aufweist, die der Länge von drei bis sechs, vorzugsweise von vier bis fünf Rippen entspricht.

10. Mehrschichtiger Schlauch umfassend von innen nach außen:
- eine Innenschicht aus einem thermoplastischen Elastomer (TPE),
- einer ersten Armierungsschicht insbesondere aus gegensinnig gewendelten Fäden oder Bändern, aus Maschenware aus Fäden oder Bändern oder einem Gewebe aus Fäden oder Bändern,
- einer ersten Zwischenschicht aus einem, insbesondere schwarz gefärbten, thermoplastischen Elastomer (TPE),
- einer zweiten Armierungsschicht insbesondere aus gegensinnig gewendelten Fäden oder Bändern, aus Maschenware aus Fäden oder Bändern oder einem Gewebe aus Fäden oder Bändern, und
- einer Schicht, insbesondere einer zweiten Zwischenschicht oder eine Außenschicht, aus einem, insbesondere gefärbten, z. B. schwarz gefärbten, thermoplastischen Elastomer (TPE).
